# EUROPEAN PATENT SPECIFICATION

(11) **EP 3 072 396 B1**
(45) Date of publication and mention of the grant of the patent: **11.07.2018**
(21) Application number: 15160383.4
(22) Date of filing: 23.03.2015
(51) Int. Cl.: A22C 15/00

(54) **Handling system and method for sausage-shaped products**
Handhabungssystem und -verfahren für wurstförmige Produkte
Système et procédé de manutention pour produits en forme de saucisse

(43) Date of publication of application: 28.09.2016
(73) Proprietor: Poly-clip System GmbH & Co. KG, 65795 Hattersheim (DE)
(72) Inventor: Hofschulte, Jens, 61381 Friedrichsdorf (DE)
(74) Representative: Eisenführ Speiser

(56) References cited:
- EP-A1- 2 342 972
- US-A- 3 158 265
- US-A- 3 696 939
- US-A1- 2009 215 367
- US-B1- 6 419 077

## Description

The present invention relates to a handling system for handling sausage-shaped products, comprising a delivery device for feeding sausage-shaped products to a hand-over area, a storage unit for temporarily storing sausage-shaped products, a transportation device for supporting and transporting a storage unit between a delivery device and a storage device as well as a method for controlling a handling system for handling sausage-shaped products.
In practice, in the production and handling of sausage-shaped products, like sausages, filling material is fed by a filling machine through a filling tube of a clipping machine into a tubular or bag-shaped packaging casing which is closed at its front end, i.e. the end pointing in the feeding direction of the filling material, by, for example, a closure means, like a closure clip. After a predetermined volume of filling material has been filled into said tubular packaging casing, gathering means with a first and a second displacer unit which can each be formed by a pair of reversibly moveable displacement elements, form a plait-like portion of the tubular packaging casing, which is at least substantially free of filling material. The clipping machine then places and closes at least one closure means, like a closure clip at the plait-like portion forming the rear end of the sausage or bag-shaped product just produced, i.e. the end pointing opposite to the feeding direction, by respective closing tools which are reversibly movable towards the plait-like portion. In the case that the sausage-shaped product has to be hung up, a suspension element, like a suspension loop is provided and attached to the second end of the sausage-shaped product by the closure clip. The sausage-shaped product just produced is fed out of the clipping machine and transferred to a hanging line where it is hung up on a rod-shaped smoking bar or smoking rod. After a predetermined number of sausages are hung up on a smoking rod, said smoking rod is transported to a storage rack for further treatment. Thereafter, a next smoking rod is filled with sausages and transferred to the storage rack. In such a system, sausages are hung up one after another on a smoking rod. After a smoking rod is filled with a predetermined number of sausages, it is removed from the hanging station and a next, empty smoking rod is inserted into the hanging station. In known storage racks, a predetermined number of filled smoking rods are positioned in one storage level of the storage rack. Dependent on the size of the sausage-shaped products, the filled smoking rods may be positioned in more than one storage level of the storage rack.

Such a handling system is known from EP patent application 1 891 858 wherein a hanging line is disclosed, in which sausages just produced in a clipping machine, are transferred to a hanging station where said sausages are hung up on a smoking rod. This known system further comprises a magazine for empty smoking rods and a smoking rod exchanging device for removing a filled smoking rod from and inserting an empty smoking rod into the hanging station. The filled smoking rods are transferred out of the hanging station by a horizontally arranged conveyor for further treatment, which supports the filled smoking rods at its ends.

Moreover, from EP patent application 2 342 972, a method for controlling a robotic device is known, by which a robotic device is controlled such that it removes a filled smoking rod from a hanging line and inserts this filled smoking rod into a storage rack. The robotic device is controlled by a control unit on the basis of data included in a data base and data stored on an identification mark of the storage rack, like an RFID chip.

From US patent 3,158,265 a smoke rack is known which comprises a base, a pair of spaced upright members providing oppositely disposed front faces supported on said base, said members each having a pair of horizontally spaced open-ended slots in the marginal edges of said oppositely disposed front faces, and a pair of oppositely disposed, horizontally aligned hangers having a lower portion of each hanger bearing against the front face of the upright member and having two spaced upper portions of each hanger turned outwardly and upwardly. Each hanger is removably mounted in the said horizontally spaced slots of the upright members so that the said upper portions of the hanger engage the rear side of the upright member.

As mentioned above, in these known devices, the sausages are hung up on a smoking rod which is then transferred to a storage rack. For filling the storage rack, or at least one storage level or charging level of the storage rack, several smoking rods have to be filled one after the other and transferred to the storage rack. Thus, the efficiency is not high.

Thus, it is an object of the present invention to provide a handling system for handling sausage-shaped products which overcome the above mentioned draw backs, and which allow a more effective handling of the sausage-shaped products. Moreover, a method is to be provided for controlling a handling system for handling sausage-shaped products.

The object regarding the handling system is achieved by the features of claim 1, and the object regarding the method for controlling a handling system for handling sausage-shaped products is achieved by the features of claim 15.

According to the present invention, there is provided a handling system for handling sausage-shaped products, like sausages, each sausage-shaped product having a sausage-shaped body and a suspension element, like a suspension loop, attached to one end of the sausage-shaped body. The handling system comprises a delivery device for feeding sausage-shaped products to a hand-over area, a storage device for temporarily storing at least one storage unit configured for a reversible accommodation of sausage-shaped products, and a transportation device configured for reversibly holding and maneuvering at least one storage unit in the hand-over area for accommodating sausage-shaped products on the storage unit and for moving the storage unit loaded with sausage-shaped products to the storage device. In the inventive handling system the storage unit is configured for a storage accommodation of sausage-shaped products in two of its dimensions.

By providing a storage unit, in which the sausage-shaped products are suspended in two of its dimensions, this storage unit may accommodate as much sausage-shaped products as necessary or possible for charging a complete charging level of the storage rack. By using said storage unit, storing a number of filled smoking rods one after the other in the same charging level may be omitted. Thus, not only the time being necessary for loading one level of the storage rack may remarkably be reduced, but also the available space for storing sausage-shaped products may utilized as much as possible.

The sausage-shaped products may be accommodated by the storage unit in various ways. In an advantageous configuration of the inventive handling system, the storage unit may be adapted for a hanging accommodation of the sausage-shaped products. According to this specific embodiment, the sausage-shaped products are hung up to the storage unit by their suspension elements.

Alternatively, the storage unit may also be adapted for a lying accommodation of the sausage-shaped products. The storage unit according to this specification, may be provide with at least approximately horizontally extending shelves which are arranged laterally to each other, and which thereby form an approximately planar accommodation area.

The expression "two of its dimension" shall explain that the sausage-shaped products can be hung up in one plane in the x- and y-direction defining this plane. Here, the plane must not be arranged horizontally, but can also be oriented in an angle referred to the horizontal. Moreover, the storage unit can be loaded with sausage-shaped products in a regular pattern, i.e. the sausage-shaped products have at least approximately the same distances to each other in both dimensions or x- and y-directions, respectively, or in an irregular pattern, i.e. the sausage-shaped products have different distances to each other at least in one dimension or direction. In conjunction with the lying accommodation of the sausage-shaped products, the term "two dimensions" has to be understood as explaining that the sausage-shaped products are arranged with their longitudinal extension, their "length", in one direction of the plane, e.g. the x-direction, and are arranged laterally to each other in the second direction, i.e. the y-direction.

The delivery device the design and the functionality of which is explained below, feeds sausage-shaped products to a hand-over area at which the products can be load to the storage unit. Dependent on the specific configuration of the delivery device for feeding sausage-shaped products to a hand-over area, one sausage-shaped product after the other may be provided in the hand-over area where the sausage-shaped products may be successively be accommodated or received by the storage unit. Alternatively, more than one sausage-shaped product may be provided in the hand-over area. Accordingly, more than one sausage-shaped product may be received by the storage unit at the same time. In other words, pairs of sausage-shaped products may be accommodated by the storage unit, or a number of sausage-shaped products corresponding to a row, preferably a complete row in the x-direction or the y-direction of the two-dimensional plane.

Moreover, the transportation device the design and the functionality of which is also explained below, transfers or maneuvers the storage unit for loading the sausage-shaped products thereon in two of its dimensions, i.e. in the x- and y-direction like in a predefined two-dimensional pattern, deposits the filled storage unit in the storage device or storage rack, respectively, and may remove an empty storage unit to be filled next from the storage device or another storage for empty storage units.

The term "maneuvers the storage unit for loading the sausage-shaped products" explains the movement of the storage unit in the hand-over area. In case of a hanging accommodation, the storage unit is moved such that a sausage-shaped product, provided by the delivery element and suspended on its suspension element, may be accommodated by a predefined receiving element on the lower surface of the storage unit. In the case of a lying accommodation, a sausage-shaped product may be provided in a hanging orientation or in a lying orientation by the delivery element. For receiving the sausage-shaped product, the storage unit is moved such that a respective sausage-shaped product may be accommodated in the lying orientation by a receiving element on the upper surface of the storage unit.

In an advantage configuration, a control unit is provided for controlling and synchronizing the operation of the delivery device and the transportation device. Dependent on their size, the sausage-shaped products may be suspended in predefined distances in one or both dimensions on the storage unit, whereby said two-dimensional pattern is created. In adaption thereto, the delivering or feeding speed of the delivering device and the movement path and speed of the transportation device may be adjusted, for an optimization of the suspension process, e.g. regarding the optimal positioning of the suspended sausage-shaped products relative to each other and the suspension time.

In order to enable an optimized suspension process, and to ensure a save hand-over of a sausage-shaped product, it is advantageous that the handling system further comprises at least a first sensor arrangement for detecting the presence of a sausage-shaped product in the delivery device. This first sensor arrangement may be arranged at any arbitrary position of the delivery device. Further advantageously, the first sensor arrangement may be provided at the delivery device in the hand-over area to ensure that a sausage-shaped product is provided in the hand-over area for being received by the storage unit. In the case that the first sensor detects that no sausage-shaped product is provided in the hand-over area, a signal may be output to an operator. Alternatively or additionally thereto, the delivery process and/or the production process may be stopped, e.g. in case of an accident. Further alternatively or additionally, in the case that only a single sausage-shaped product has been omitted, the suspension process may be continued by providing the next sausage-shaped product detected in the hand-over area to the receiving element next to be loaded.

Independently or additionally to the first sensor arrangement, it is further advantageous that the handling system comprises a second sensor arrangement for detecting at least the presence of a storage device and/or the charging level of the storage device. Alternatively or additionally, the second sensor arrangement may also be configured to identify a specific storage device or the specific kind of the storage device. By identifying a specific kind of storage devices or a specific single storage device, it is possible to use a great variety of different storage devices in the handling system, e.g. by adapting the loading or unloading process of the storage devices according to these information.

In the case of a hanging accommodation of the sausage-shaped products, the suspension process defines that part of the handling process in which the sausage-shaped products to be handled, are hung up on the storage unit. Due to the movement or maneuvering of the storage unit by the transportation device during said suspension process, the sausage-shaped products already suspended to the storage unit may execute pendulous movements while hanging at their suspension elements. Also, the sausage-shaped products delivered by the delivering device may execute a pendulous movement caused by the transportation movement towards the hand-over area. In order to reduce these pendulous movements and, thereby to reduce the risk of damages of the sausage-shaped products, in a further advantageous configuration, a damping device may be arranged in the region of the hand-over area, for damping the movement of the sausage-shaped products fed by the delivery device and received by the storage unit. Furthermore, alternatively or additionally to a damping device provided in the hand-over area, a damping device can also be provided for damping the swinging movement of the sausage-shaped products when moved to the storage device. This damping device may be designed such that it may reversibly be moved together with the storage unit towards the storage device.

Alternatively or additionally to a damping device, the movement of the storage unit during the suspension process and/or the transportation step from the hand-over area to the storage device may be controlled such that an unintended movement of the sausage-shaped products, like pendulous movement, may be omitted ore at least reduced. To avoid or reduce such pendulous movements of the sausage-shaped products already hung up at the storage unit, the storage unit or the transportation device, respectively, may execute respective counter movements, e.g. in lateral and/or vertical directions in order to balance possible pendulous movements of the sausage-shaped products.

The sausage-shaped products are suspended to the storage unit in two of its dimensions, e.g. preferably in a predefined two-dimensional pattern, or the sausage-shaped products are lying in a two-dimensional pattern, preferably laterally one by one, on the storage unit. Thus, in a preferred embodiment, the storage device according to the present invention includes a storage frame or storage rack having at least one receptacle for at least approximately horizontally receiving and supporting at least one storage unit.

It has to be noted that the storage frame or rack may also be adapted to receive more than one storage units. The storage rack may be provided with a plurality of receptacles arranged in regular or non-regular intervals in vertical direction to each other, to enable the positioning of storage units in the storage rack in a large variety of vertical distances to each other, e.g. dependent on the length of the sausage-shaped products suspended thereto, and the kind of accommodation, i.e. a hanging or a lying accommodation.
The handling system according to the present invention may further comprise a weighing device which e.g. may include load cells or weighing cells. By means of the weighing device, the weight of a sausage-shaped product just accommodated by the storage unit may be detected. Alternatively, the weight of all sausage-shaped products accommodated by the storage unit may be detected and the filling level of the storage unit may be determined. In one possible embodiment, the weighing device is advantageously positioned at any suitable place between the storage unit and the transportation device. Alternatively, the weighing function may be included in one of the drives, e.g. by sensing a counter-force for holding the storage unit in the receiving position in the handover area, which e.g. may be related to a counter force for holding an empty storage unit.

According to the present invention, the system comprises a delivery device for feeding sausage-shaped products, like sausages, to a hand-over area. The delivery device comprises at least one feeding element for successively feeding the sausage-shaped products to the hand-over area. The inventive delivery device is provided with a delivery means arranged in the hand-over area, for providing the sausage-shaped product to be delivered to the storage unit being arranged in the hand-over area. Due to the delivery means, the sausage-shaped product may be provided in a predefined position for being removed from the delivery device.
The sausage-shaped product to be handled may be provided by the delivery device in various ways. In one embodiment, the delivery means may include a stationary arranged delivery element at which the at least one sausage-shaped product is provided for being removed by a receiving element. The delivery element according to a specific embodiment may be realized by a longitudinal extending element having a fork-shaped free end at which the sausage-shaped product, suspended on its suspension element, is provided for being removed by a receiving element. The receiving element should have a corresponding design, like a free hook-shaped end which may be positioned such that it engages the fork-shaped free end of the delivery element for removing the sausage-shaped product there from, like by engaging the suspension element of the sausage-shaped product. As explained in greater detail below, a storage unit at which the sausage-shaped products are suspended in two of its dimensions includes a number of receiving elements at which the sausage-shaped products may be hung up by their suspension elements. The delivery element as well as the receiving elements may have any suitable shape for ensuring a save hand-over of the sausage-shaped product to be handled. Independent from the specific design, it is essential to the present invention that these elements have corresponding designs enabling a handover of a sausage-shaped product from the delivery element to the receiving element.

Alternatively to the stationary delivery element, the delivery means may include a movable arranged delivery element for handover the sausage-shaped product suspended to a receiving element. The movable delivery element may execute the handover movement while the receiving element is stationary positioned in the hand-over area, e.g. in front of the delivery element. As one possible example, a movable delivery element may include a lever which may be pivoted a receiving position in which a sausage-shaped product is received by the lever, and a hand-over position, such that the sausage-shaped product during this movement is transferred to the receiving element of the storage unit. The delivery element may have any suitable design, such as a hook- or fork-shaped free end on a linear or curved lever.

As a further alternative, the delivery element may be formed by the feeding element of the delivery device, which may have a desired design as to enable a receiving element to remove the sausage-shaped product from said feeding element while being positioned in the hand-over area.

The delivery device may include a conveyor device to which the feeding element is attached. In one embodiment, the conveyor is an endless conveyor with an upper run and a lower run arrange vertically above each other. Naturally, the conveyor may be arranged such that the upper and lower run is arranged lateral to each other.

In order to enable a lying accommodation of the sausage-shaped products on the storage unit, the feeding element itself may include a conveyor element on which the sausage-shaped products may be provide in lying orientation for being delivered onto the storage unit. Alternatively thereto, the conveyor of the delivery device may be designed such that its end facing towards the hand-over area forms the delivery element. It has to be understood that the storage unit should be provided with respective accommodation elements, like shelves, on its upper surface for accommodating the sausage-shaped products in a lying orientation.

The conveyor extends between the front end referred to the feeding or delivery direction, and the rear end of the delivery device, whereby one of the ends of the conveyor, preferably the front end, is arranged in or at least closed to the hand-over area, and the rear end is arranged closed to a clipping machine or a feeding device feeding the sausage-shaped products out of the clipping machine. It has to be understood that also sausage-shaped products may be handled by the delivery device, which are not just produced, but stored in a respective storage space, and which are fed to the delivery device by a respective feeding mechanism.

Independently from its specific design, the delivery device may be controlled such that it may also function as a buffer for the sausage-shaped products being fed to the hand-over area. That means that e.g. the feed rate of the sausage-shaped products to the hand-over area may at least temporarily be reduced, e.g. in order to enable the exchange of a filled storage unit by an empty storage unit. In the case that the delivery device is directly coupled to a clipping machine for producing sausage-shaped products, the production process of the clipping machine not necessarily needs to be interrupted. Alternatively to a reduction of the feeding rate of the delivery device, if possible, the distance between two subsequent sausage-shaped products positioned on the delivery device, may be reduced. In these cases, after a filled storage unit is removed from the hand-over area and an empty storage unit is provided for receiving sausage-shaped products from the delivery device, the feed rate of the delivery device may be set to a normal value and the receiving rate of the storage unit, or the speed of the suspension process, may temporarily be increased until the sausage-shaped products buffered by the delivery device are accommodated by the storage unit.

According to the present invention, the system comprises a storage unit for temporarily storing sausage-shaped products. The storage unit comprises a frame work arranged at least approximately in a plane having an upper surface and an at least approximately planar lower surface and an engagement arrangement for an engagement or temporarily coupling with the transportation device. The inventive storage unit further includes receiving elements arranged in a two-dimensional pattern.
In order to enable a hanging accommodation of the sausage-shaped products, the receiving elements are arranged on the lower surface of the frame work, such that the sausage-shaped products may hung up thereto by their suspension elements.
Alternatively, for enabling a lying accommodation of the sausage-shaped products, the storage unit may be provided with receiving elements on its upper surface, e.g. in the form of longitudinal extending shelves arranged laterally to each other, on which the sausage-shaped products may be accommodated in a lying orientation.
The frame work may be realized by any suitable elements, which allow the arrangement of receiving element thereto and on their lower surface in a two-dimensional pattern. In a simple case, a planar element, like a rectangular metal sheet, may form the frame work or at least the planar surface. In other cases, bars or longitudinal extending profiles may be used to form the frame work.

For a hanging accommodation of sausage-shape products, the arrangement of receiving elements in a two dimensional pattern in a frame work having an at least approximately planar lower surface enables the suspension of sausage-shaped products not only in one dimension, like a linear arrangement on smoking rods, but in two dimensions, i.e. in a plane. Thereby, all sausage-shaped products corresponding to the number and pattern necessary for completely filling a charging level of a storage frame or storage rack may be suspended to one storage unit.

Naturally, also in the case of a lying accommodation of sausage-shaped products by the inventive storage unit, the receiving elements, like shelves, arranged on the upper surface of the storage unit, which may be adapted to the size of the sausage-shaped products, e.g. the diameter and the length, enable the accommodation of all sausage-shaped products corresponding to the number and pattern necessary for completely filling a charging level of a storage frame. It has to be understood that, according to the length of a sausage-shaped product, more than one sausage-shaped product may be accommodated by one shelve.

It has to be understood that the outer dimensions, i.e. to length and width, of the storage unit correspond with the respective dimension of the storage rack, and particularly of the supports or receptacles in the storage rack.

In a preferred embodiment of the storage unit, the receiving elements for a hanging accommodation of sausage-shaped products are hook-shaped, for enabling an easy receiving and a secure suspending of the sausage-shaped products thereto.

It has to be understood that the receiving elements may have any other desired shape. In a simple layout, the receiving elements may be realized by an arbor, e.g. arranged in a suitable angle, which engages the suspension element. The receiving elements may also have a more complex design, e.g. by including claws, which may be movable arranged, and which e.g. may be closed under the weight of the sausage-shaped product received by one of the claw elements.

In a further preferred embodiment the receiving elements are arranged in rows and columns, which enable a large variety of two-dimensional patterns in which the sausage-shaped products may be suspended.
The receiving elements may be arranged in regular or in non-regular intervals at the storage unit in one or both dimensions or directions defining the plane of the storage unit. However, regular intervals are preferred, whereby, the sausage-shaped product, independent from their diameter, may be suspended in regular intervals, enabling an optimized filling degree of the storage unit.
For a lying accommodation of sausage-shaped products on the storage unit, the receiving elements advantageously are formed by shelves arranged approximately horizontally and laterally to each other, on the upper surface of the storage unit. The size of the shelves may vary dependent on the size of the sausage-shaped products to be handled.
Alternatively, the upper surface of the storage device may have any other suitable design. In a simple case, the receiving elements may be formed by horizontally arranged bars which are aligned parallel to each other. In this case, two adjacent bars may for a receiving element on which a sausage-shaped product may be accommodated.

According to the present invention, the system comprises a transportation device for supporting and transporting a storage unit between a delivery device and a storage device. The transportation device comprises an engagement head for temporarily holding or coupling and maneuvering a storage unit and multi-axial drive means for maneuvering the engagement head about multiple axes and in multiple planes.
The inventive transportation device thereby enables the movement of the storage unit in any desired moving path, whereby, when using a storage unit which allows the suspension of sausage-shaped products in two of its dimensions, sausage-shaped products to be suspended on the storage unit, may be suspended in any desired order and any desired two-dimensional pattern. The inventive transportation device further enables a storage unit to be moved such that sausage-shaped products may be accommodated on its upper surface in a lying orientation. Moreover, the inventive transportation device allows inserting the filled storage unit and removing an empty storage unit from a storage device.

The transportation device according to a preferred embodiment may be realized by a robot. The robot may include multi-axial drive means. In order to realize a complex movement of the storage unit, e.g. during the suspension process, the robot may include a plurality of arms movable by the drive means. Dependent on its specific construction, the robot may have a serial or parallel kinematic.

Naturally, the above described devices, the delivery device, the transportation device and the storage device, and the storage unit are adapted to be arranged together such that they form the inventive handling system, or may be used as separate components, e.g. in other known handling systems.

Further according to the present invention, there is provided a method for controlling a handling system for handling sausage-shaped products, like sausages, each having a sausage-shaped body and at least one suspension element, like a suspension loop, attached to one end of the sausage-shaped body, wherein the handling system comprises a delivery device for feeding sausage-shaped products to a hand-over area, a storage device for temporarily storing at least one storage unit configured for a reversible hanging or lying accommodation of sausage-shaped products, and a transportation device configured for reversibly holding and maneuvering at least one storage unit in the hand-over area for accommodating sausage-shaped products in the storage unit and for moving the storage unit loaded with sausage-shaped products to the storage device. The method comprises the steps of:
- feeding the sausage-shaped products by the delivery device into a hand-over area,
- maneuvering a storage unit by the transportation device in the hand-over area for accommodating sausage-shaped products in the storage unit, and
- moving the storage unit from the hand-over area to the storage device by the transportation device.

The method according to the present invention further comprises the step of moving the storage unit in the hand-over area by the transportation device relative to the delivery device, for arranging the sausage-shaped products on the receiving elements of the storage unit in two dimensions, e.g. in a two-dimensional pattern. According to this method step, the sausage-shaped products are provided by the delivery device at a fixed position in the hand-over area.

Alternatively, the method may comprise the step of positioning the storage unit in the hand-over area by the transportation device and moving a delivery element of the delivery device, for arranging the sausage-shaped products on the receiving elements of the storage unit in two of its dimensions, e.g. in an regular or non-regular two-dimensional pattern. According to this alternative method step, the receiving element of the storage unit, on which the next sausage-shaped product has to be accommodated, is arranged in a fixed position in the hand-over area relative to the delivery device, and the delivery element is moved for handover the sausage-shaped product to be accommodated by the respective receiving element, like a pivot movement of the delivery element with the sausage-shaped product thereon.

The inventive method thereby provides the same advantages as explained in conjunction with the inventive handling system and the inventive devices and units.

Further advantages and preferred embodiments of the present invention will be described in the following together with the drawings listed below. The expressions "left", "right", "below" and "above" used in the following description, are referred to the drawings in an alignment such that the reference numbers and the notation of the Figs. used can be read in normal orientation.

In the drawings:
- Fig. 1:: is a schematic and perspective view to a first embodiment of the system for handling sausage-shaped products according to the present invention, in a home position;
- Fig. 2:: is a schematic and perspective view to an embodiment of a storage unit according to the present invention;
- Fig. 3:: is a schematic and perspective view to the handling system according to Fig. 1 during the handling operation;
- Fig. 4:: is a schematic and perspective view to the handling system according to Fig. 1 during the handling operation;
- Fig. 5:: is a schematic and perspective view to the handling system according to Fig. 1 during the handling operation; and
- Fig. 6:: is schematic and perspective view to a further embodiment of the handling system according to the present invention.

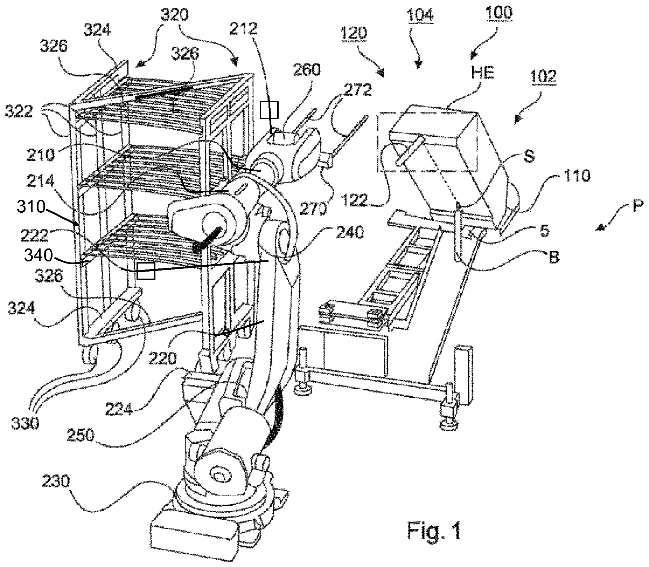

Fig. 1 is a schematic and perspective view to a first embodiment of the system for handling sausage-shaped products according to the present invention, in a home position, e.g. immediately before starting the handling process.

As it can be seen in Fig. 1, the handling system for handling sausage-shaped products P includes a delivery device 100, a transportation device 200, a storage device 300 and storage units 400.

Delivery device 100 has a rear end 102 and a front end 104, and comprises a conveyor apparatus, which is not visualized in Fig. 1 in greater detail. The conveyor apparatus extends between rear end 102 and front end 104 of delivery device 100 wherein the feeding or delivery direction, respectively, extends from rear end 102 to front end 104 of delivery device 100. The conveyor apparatus includes an endless conveyor element, which may be a conveyor chain or a conveyor belt. The conveyor element has at least an approximately linearly lower run which extends upwardly from rear end 102 to front end 104 of delivery device 100. The conveyor element comprises feeding elements 110 which extend approximately radially outwardly from the conveyor element. Feeding elements 110 are arranged on the conveyor element in regular intervals. However, in principle, it is also possible that they are arranged with non-regular or irregular distances to each other.

According to Fig. 1, on feeding element 110 of delivery device 100, a sausage-shaped product P, which comprises a sausage-shaped body B and a suspension element S in the form of a suspension loop, is suspended by its suspension element or suspension loop S.

Delivery device 100 further comprises a delivery means 120 arranged at front end 104, and which includes a delivery element 122. Delivery element 122 has a first end and a second end, and is attached to front end 104 of delivery device 100. Delivery element 122 extends approximately horizontally from front end 104, with its second end or free end facing away from delivery device 100.

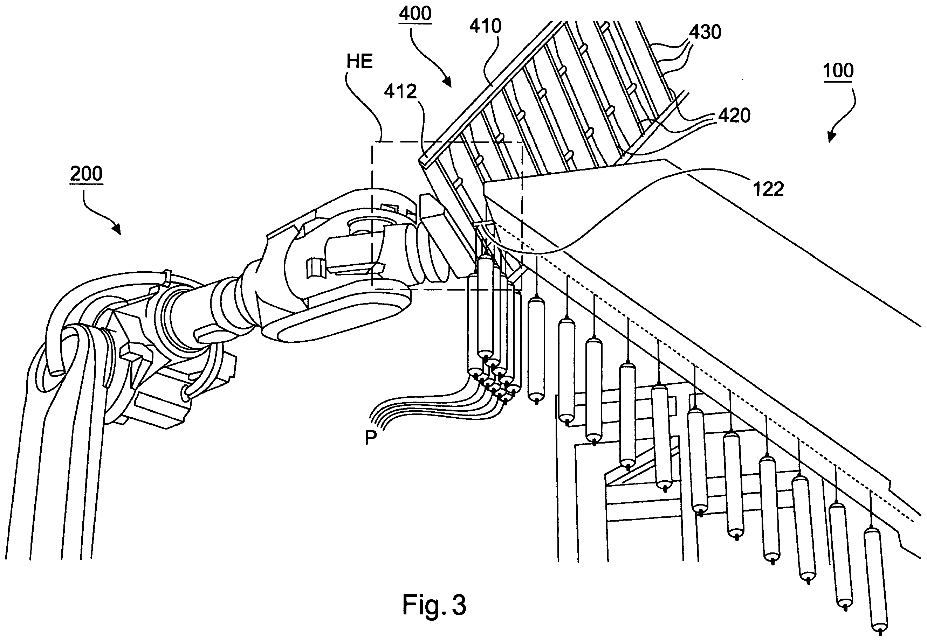

A hand-over area HE in which the sausage-shaped product P is provided for being removed from delivery device 100 by transportation device 200 together with storage unit 400, is arranged in the region of front end 104 of delivery device 100. Delivery element 122, and in particular, at least its free end, extend into hand-over area HE. Delivery element 122 is arranged such that a sausage-shaped product P transported by feeding element 110 of the conveyor device, is transferred onto delivery element 122, and is positioned at its free end. In order to prevent collisions between delivery device 100 and a storage unit 400 provided in hand-over area HE for receiving sausage-shaped products P (c.f. Fig. 3), delivery element 122 should be arranged at least approximately horizontally, or such that the free end of delivery element 122 forms the highest point of delivery device 100, e.g. delivery element 122 may face upwardly.

Transportation device 200, which, in the embodiment shown in Fig. 1, is a multi-axial robotic device or robot, respectively, is positioned in front of delivery device 100. Transportation device 200 comprises a first arm 210, a second arm 220 and a base 130. First arm 210 has a first end 212 and a second end 214, and second arm 220 has a first end 222 and a second end 224. First arm 210 is coupled by its second end 214 to first end 222 of second arm 220 via a first multi-axial drive 240, and second end 224 of second arm 220 is coupled to base 130 by its second end 224 via a second multi-axial drive 250.

First multi-axial drive 240 allows first arm 210 to rotate about its longitudinal axis and to pivot relative to second arm 220 about an axis extending vertically to the longitudinal extension of second arm 220 and through its first end 222.

Second multi-axial drive 250 allows second arm 220 to pivot about an axis extending through the second end 224 of second arm 220, wherein this axis is aligned parallel to the pivot axis of first arm 210, which extends through first end 222 of second arm 220. Additionally, second arm 220 may be rotated about an axis extending vertically from base 230.

Transportation device 200 further comprises an engagement head 270 coupled to first end 212 of first arm 210 by a third multi-axial drive 260, which allows engagement head 270 to be pivoted about an axis extending vertically to the longitudinal extension of first arm 210 wherein this axis extends through first end 212 of first arm 210. Engagement head 270 may also be rotated about an axis extending vertically to its pivot axis.

Engagement head 270 comprises a fork-shaped engagement portion including two tines 272 arranged approximately parallel to each other. Tines 272, in the embodiment of Fig. 1, have an approximately circular cross-section and a length which can correspond to the depth of storage device 300 and storage unit 400, respectively.

On the left side of delivering device 100, storage device 300 is arranged, which, according to the shown embodiment, includes a storage rack 310 of a substantially cubical shape and securing means (not shown) for securing storage rack 310 in its position, e.g. that shown in Fig. 1, which is the loading position.

Storage frame or storage rack 310 has two side parts 320 each including three vertical posts 322, namely two corner posts and one centre post arranged between the corner posts, an upper and a lower horizontal bar 324 connecting the upper and lower ends of vertical posts 322 and an upper as well as a lower traverse bar 326 connecting side parts 320 to each other. Storage rack 320 according to Fig. 1 further comprises six rollers 330, with three rollers 330 arranged on the lower side of each lower horizontal bars 324 and approximately vertically below vertical posts 322.

Storage rack 310 further comprises three pails of horizontally arranged trays 340, wherein each pair of trays 340 is arranged in a horizontal plane and forms a charging or loading level, respectively. Trays 342 attached to the inner side of side parts 320 such that each pair of trays 342 is arranged opposite to each other on the respective other side part 320.

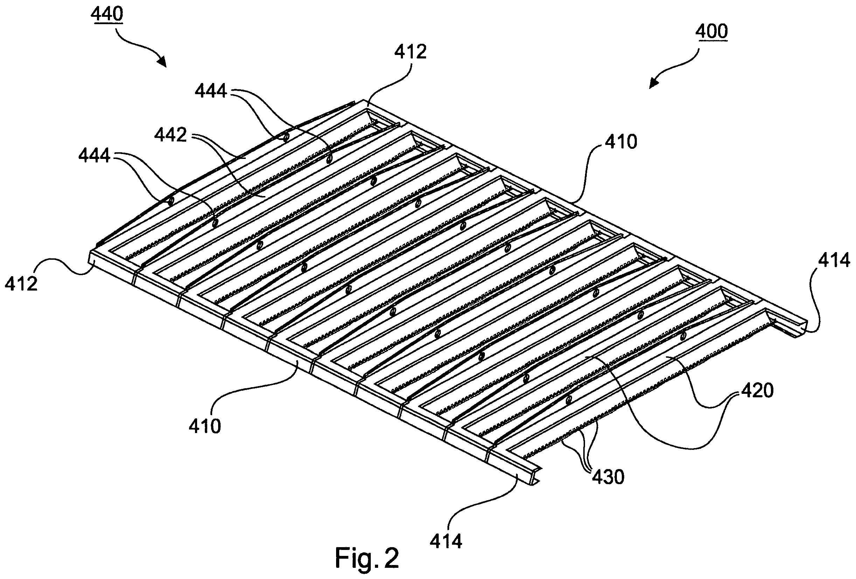

On each pair of trays 342, a storage unit 400 can be positioned, which will be explained below in greater detail in conjunction with Fig. 2. Each storage unit 400 includes amongst others a pair of support bars 410 arranged parallel to each other and in a distance corresponding to the inner width of storage rack 310 or the distance between side parts 320 of storage rack 310, and which have a length corresponding to the depth of storage rack 310, such that support bars 410 are carried by a pair of trays 342, when storage unit 400 is positioned in storage rack 310. Storage unit 400 further comprises carrier bars 420 which extend between support bars 410, approximately vertically thereto. On the lower side of carrier bars 420, the receiving elements 430 are arranged (not visible in Fig. 1) for receiving suspension loops S of sausage-shaped products P suspended by their suspension loops S thereto.

The handling system further comprises a control unit (not shown) for controlling at least those units or devices which include moving devices, like the delivery device 100 and the transportation device 200. Furthermore, sensor arrangements or sensors, respectively, may be provided (also not shown), which are also coupled to the control unit. These sensors may be arrange in hand-over area HE for detecting the presence and position of a sausage-shaped product P and/or the presence and position of a receiving element in hand-over area HE. A sensor may also be positioned to detect the presence or position of a storage rack 310 in storage device 300 and/or to detect the load condition of one ore more charging levels of storage rack 310, i.e. the presence or absence of a storage unit 400.

Fig. 2 shows a schematic and perspective view to an embodiment of a storage unit according to the present invention.

Storage unit 400 in the form of an at least approximately rectangular suspension frame includes two support bars 410 of identical length, which are arranged parallel and with a distance to each other such that the outer width of storage unit 400 at least approximately corresponds to the inner width of storage rack 310, namely the distance between side parts 320 of storage rack 310. Support bars 410 have first ends 412 and second ends 414, whereby first ends 412 define the front side of storage unit 400 and second ends 414 define its rear side. In the specific embodiment of Fig. 2, support bars 410 are U-shaped profiles with their open side facing each other.

Storage unit 400 further comprises carrier bars 420 arranged in regular intervals, wherein carrier bars 420 extend between support bars 410 and at least approximately vertically thereto such that support bars 410 and carrier bars 420 are arranged in a common plane forming a checkered pattern. Each carrier bar 410 has an approximately L-shaped cross-sectional profile with one of the legs of the "L" arranged horizontally and in the plane defined by the upper surfaces of support bars 410. The respective other leg extends downwardly and between support bars 410 and faces towards the rear side of storage unit 400, which is defined by second ends 414 of support bars 410. It has to be noted that the angle between the legs of the L-shaped profile not necessary needs to be a right angle of approximately 90°, but may also be larger or smaller.

At the lower free edge of L-shaped carrier bar 420, receiving elements 430 are arranged in regular intervals. Receiving elements 430 are hook-shaped with a free end extending upwardly and towards the rear side of storage unit 400. In the specific embodiment of Fig. 2, receiving elements 430 are formed by stripe-shaped protrusions extending from the lower free edge of carrier bar 420, which are bent upwardly. Receiving elements 430 terminate in a tip end.

On the upper free edge of L-shaped carrier bars 420, an engagement arrangement 440 is provided, which is realized by approximately trapezoid protrusions 442 or engagement elements extending approximately over the entire length of carrier bars 420 and approximately vertically to the upper leg of L-shaped carrier bars 420. Trapezoid protrusions or engagement elements 442 are attached to carrier bars 420 by their base side. In each of engagement elements 442, two holes 444 are arrange in identical distances to each other. Holes 444 are arranged with their centre points at two lines being aligned parallel to each other and to support bars 410, and in a plane parallel to the plane defined by support bars 410. The diameter of holes 444 corresponds to the diameter of tines 272 of engagement head 270 so that tines 272 of engagement head 270 can be introduced in holes 444 for a temporarily coupling of engagement head 270 and storage unit 400.

As it can be seen in Fig. 2, the distance between one hole 444 of each engagement element 442 to the nearest support bar 410 and the distance between the respective other hole 444 of said engagement element 442 to the respective other support bar 410 are approximately identical. That means that storage unit 400, and in particular engagement elements 442 may approximately centrally be engaged by engagement head 270, regarding the geometrical centre and the centre of mass.

In the embodiment of Fig. 2, a carrier bar 420, the respective receiving elements 430 and engagement element 442 are integrally formed from a sheet material, like a sheet metal. Of course, it is also possible to attach an engagement element 442 and receiving elements 430 as separate parts to a carrier bar 420, e.g. by welding, riveting, gluing or screwing.

Naturally, any other profiles may be used for support bars 410 or carrier bars 420, like L-shaped profiles (support bars), U-shaped profiles (carrier bars), rectangular, triangular or round profiles, which may be manufactured of hollow profiles or solid material.

Also, receiving element 430 may be realized by other means than hook-like bent protrusions. Receiving elements 430 may be separate hook-shaped elements fixedly attached to carrier bars 420. Also, receiving elements 430 may movably attached to carrier bars 420, like claws which actively engage suspension loop S of a sausage-shaped product P, e.g. by opening and closing a claw or any suitable gripping device. Such movable receiving elements 430 may be activated by the weight of a sausage-shaped product P when coming in contact with respective receiving element 430 or a portion thereof.

Engagement elements 442, which are formed by trapezoid protrusions each including two holes 444, may also have any other suitable design. Depending on the shape of engagement portion or tines 272 of engagement head 270, engagement elements 442 may have other than circular holes 444, which are adapted to the shape of the engagement portion of engagement head 270. Engagement elements 442 of storage unit 400 not necessarily need to extend over the whole width of storage unit 400 or carrier bars 420. Moreover, not any carrier bars 420 need to be provided with an engagement element 442. It may be sufficient to arrange one ore more engagement elements 442 centrally on the upper surface of storage unit 400, particularly on the upper surface of one or more carrier bars 420.

It is an essential aspect of engagement elements 442 and the respective engagement head 270 to support storage unit 400 such that pivoting movements between storage unit 400 and engagement head 270 are omitted, and that storage unit 400 may be positioned by transportation device 200, and in particular supported by engagement head 270, in any suitable position to enable a secure suspension of sausage-shaped products P, transportation of storage unit 400 between delivery device 200 and storage device 300, and inserting and removing storage unit 400 from and into storage unit 400 may be executed.

Fig. 3 is a schematic and perspective view to the handling system according to Fig. 1 during the handling operation, particularly during suspending sausage-shaped products P to storage unit 400.

As it can be seen in Fig. 3, for suspending sausage-shaped products P provided by delivery device 100 in hand-over area HE on storage unit 400, storage unit 400 has been engaged by engagement head 270 of transportation device 200, and moved into hand-over area HE such that sausage-shaped products P positioned on delivery element 122 may be suspended on a receiving element 430 of storage unit 400. Engagement head 270 has engaged engagement assembly 440 of storage unit 400 by inserting rod-shaped tines 272 into holes 444 of engagement elements 442.

During suspending sausage-shaped products P on storage unit 400 received from delivery device 100 in hand-over area HE, storage unit 400 is held by transportation device 200 in an angle of approximately 45° with the rear end of storage unit 400 directed upwardly and towards delivery device 100.

As further can be seen in Fig. 3, the suspension of sausage-shaped products P on storage unit 400 starts at the receiving elements 430 arranged at front most carrier bar 420, arranged closed to first end 412 of support bars 410, and on one side thereof, which, in Fig. 3, is the right side of storage unit 400, when seen from delivery device 100, towards its left side.

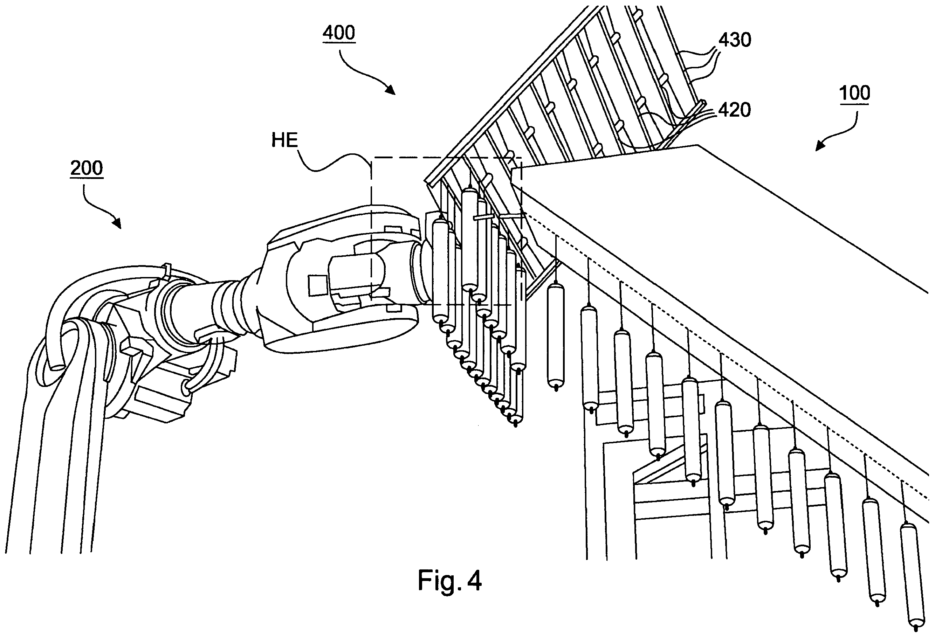

Fig. 4 is a schematic and perspective view to the handling system according to Fig. 1 during the handling operation shown in Fig. 3.

As can be seen in Fig. 4, receiving elements 430 of the front most carrier bar 420 of storage unit 400 are filled with the predetermined number of sausage-shaped products P. The suspension operation has been continued by suspending sausage-shaped products P to the receiving elements 430 of the second carrier bar 420, started from the left most receiving element 430.

Moreover, as can be inferred from Figs. 3 and 4, during the suspension operation, i.e. while completely filling a storage unit 400, sausage-shaped products P are continuously delivered into hand-over area HE by delivery device 100 and provided by delivery element 122, for being suspended via its suspension element S to receiving elements 430 of storage unit 400.

Naturally, depending on the kind and size of the sausage-shaped products P to be handled, it may be desired to discontinuously deliver sausage-shaped products P to be suspended.

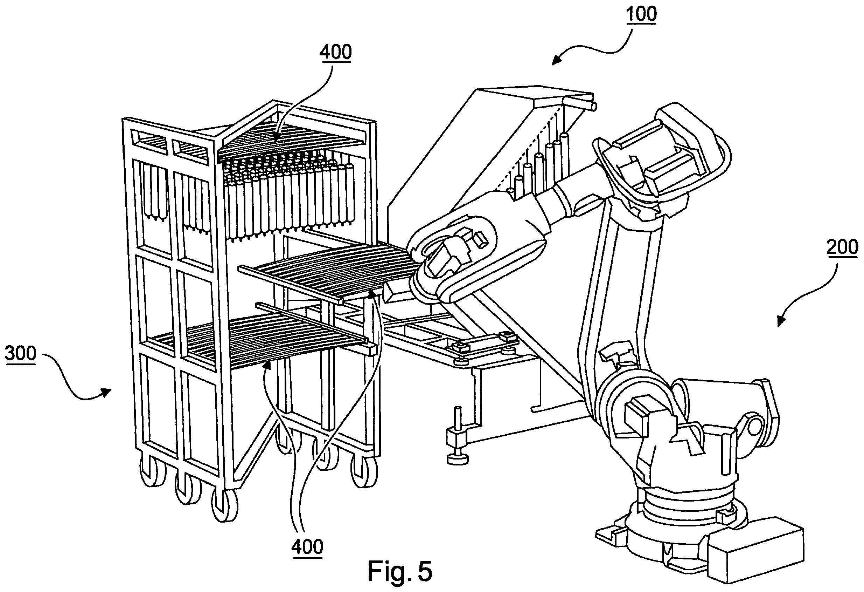

Fig. 5 is a schematic and perspective view to the handling system according to Fig. 1 during the handling operation.

According to Fig. 5, three storage units 400 are provided in the handling system, which may be received from storage rack 300. A first storage unit 400 has completely been filled with the desired or predetermined number of sausage-shaped products P, and has been transferred into storage rack 310 of storage device 300. Storage rack 300 includes three charging levels, realised by three pairs of trays 340. The completely filled storage unit 400 has been placed on the upper most pair of trays 340 defining the upper most charging level of storage rack 310, by transportation device 200.

For suspending sausage-shaped products P to the next storage unit 400, transportation device 200 has engaged engagement assembly 440 of said second storage unit 400 by its engagement head 270, and has removed said storage unit 400 from storage rack 310 for moving storage unit 400 to delivering device 100.

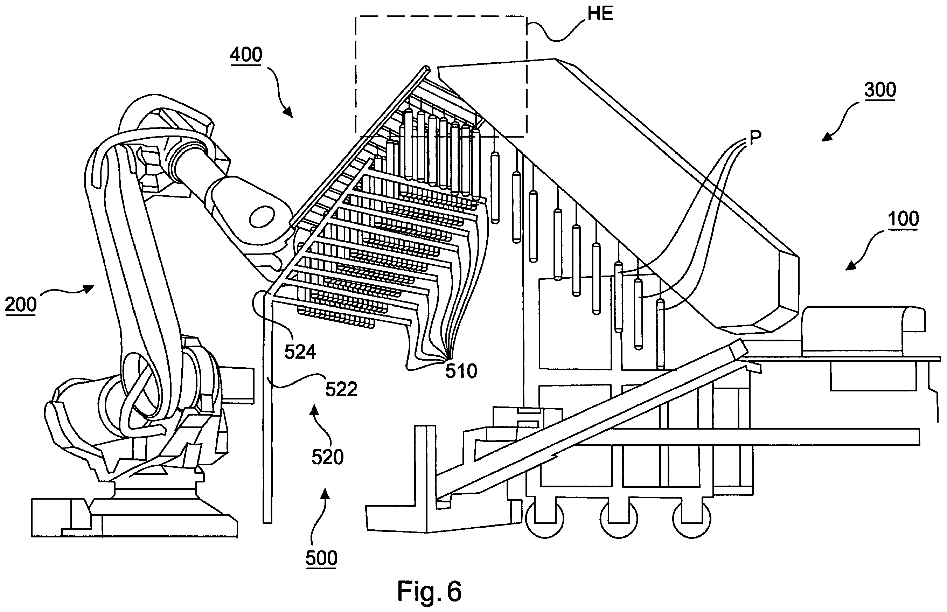

Fig. 6 is schematic and perspective view to a further embodiment of the handling system according to the present invention.

The handling system according to the embodiment of Fig. 6 comprises delivery device 100, transportation device 200, storage device 300 and storage units 400. As further can be seen in Fig. 6, a damping device 500 is arranged between delivery device 100 and transportation device 200, and in the region below hand-over area HE.

Damping device 500 includes damping elements 510, which in the shown embodiment are realized by bar-shaped damping elements or lips. Damping elements or lips 510 are arranged horizontally and parallel to carrier bars 420 of storage unit 400 when provided in the suspension position, as shown in Figs. 3, 4 and 6, during the suspension process, in hand-over area HE. Damping elements or damping lips 510 are arranged in regular intervals to each other and in a plane parallel to the plane defined by storage unit 400 in the suspension position. Damping lips 510 are supported by a carrier 520 including a vertical carrier post 522 and a coupling bar 524. Coupling bar 524 extends in the plane defined by damping lips 510, and is connected to the upper end of carrier post 522. For being supported by carrier 520, the left ends of damping lips 510 are coupled to coupling bar 524.

The position and number of damping lips 510 may be adjusted to size and number of sausage-shaped products P to be suspended to storage unit 400. The height of damping lips 510 may be adjusted by varying the length of carrier post 522. The number and position of damping lips 510 may be varied by adding or removing damping lips 510 to or from coupling bar 524, and/or by changing the angle between carrier post 522 and coupling bar 524.

It has to be understood that damping device 500 may also have any other suitable design. Damping device 500 may be provided with other damping elements than damping lips. Brushes may be arranged below hand-over area HE having bristles extending upwardly, and having a length sufficient to be engaged by sausage-shaped products of any desired size and length. Such damping elements need not to be adjusted to the sausage-shaped products to be handled.

In the following, the handling process will be described in detail:
A handling system according to the present invention may be used for suspending sausage-shaped products P, like sausages, in a storage rack 310. The handling system may be positioned immediately downstream a clipping machine, in which sausage-shaped products P are produced, i.e. a tube-shaped casing is filled with a filling material and is closed on its both front ends with closure means, like closure clips, and is provided with a suspension loop S, or the conveyor system arranged downstream the clipping machine for carrying the sausage-shaped products P just produced, out of said clipping machine.

A sausage-shaped product P to be handled by the inventive handling system is received at rear end 102 of delivery device 100, particularly by a feeding element 110 of the conveyor element of delivery device 100, and is transported by feeding element 110 towards front end 104 of delivery device 100, where it is positioned on delivery element 122 of delivery means 120.

Delivery element 122 may be provided with a fork-shaped free end extending away from delivery device 100. Sausage-shaped product P to be handled may be positioned such that it is hung up with its suspension loop S on said fork-shaped free end of delivery element 122.

At the same time, alternatively before or after said sausage-shaped product P has been provided on delivery element 122, transportation device 200 engages the engagement arrangement 440 of a storage unit 400 positioned in storage rack 310 of storage device 300, by its engagement head 270, removes said storage unit 400 from storage rack 300 and moves it into hand-over area HE. Transportation device 200 positions storage unit 400 in hand-over area HE such that the first receiving element 430 on which it is desired to hang up the first sausage-shaped product P, is arranged closed to delivery element 122. Transportation device 200 further maneuvers storage unit 400 such that hook-shaped receiving element 430 engages suspension loop S of sausage-shaped product P provided on delivery element 122 in hand-over area HE, i.e. transportation device 300 together with storage unit 400 carries out a hook-like movement to pick-up suspension loop S on hook-like receiving element 430. Of course, this movement of transportation device 300 can be adapted along the design and shape of receiving element 430 and/or delivery element 122.

Hereafter, transportation device 200 removes receiving element 430 with sausage-shaped product P hanging thereon, from delivering element 122, and positions the next receiving element 430 in front of delivering element 122. Meanwhile, the next sausage-shaped product P to be handled is positioned on the free end of delivering element 122, and transportation device 200 moves or maneuvers storage unit 400 such that the next sausage-shaped product is suspended by its suspension loop S on the desired receiving element 430, according to the selected two-dimensional pattern in which the sausage-shaped products P have to be hung up on storage unit 400.

At least one sensor (not shown) may be arranged in hand-over area HE, which detects the presence and/or the position of the sausage-shaped product P on delivery element 122. In case that a sausage-shaped product P is correctly positioned, the sensor may allow transportation device 200 to proceed further. On the other hand, in the case that no sausage-shaped product P is positioned on delivery element 122, or a sausage-shaped product P is not correctly positioned on delivery element 122, the sensor may stop delivery device 100 and/or transportation device 200, or the handling system, and may output a respective signal.

In order to reduce the length of the moving path of storage unit 400 during the suspension process, receiving elements 430 attached to one carrier bar 420, and arranged in rows, are filled, starting from one end of the respective carrier bar 420 towards its other end. Thereafter, receiving elements 430 of the next carrier bar 420 are filled in opposite order. Thereby, while sausage-shaped products P are suspended on storage unit 400, storage unit 400 is moved by transportation device 200 in, for example, a zigzag path.

Alternatively to the zigzag path in which storage unit 400 may be moved for reducing the length of its moving path during the suspension process, storage unit 400 may be moved by transportation device 200 in a helical or screw-shaped path, clockwise or counterclockwise. During such movement of storage unit 400, suspending sausage-shaped products P onto receiving elements 430 of carrier bars 420 is always started from the same end of carrier bars 420. While executing one revolution on the screw-shaped path or one approximately circular movement, sausage-shaped products P are suspended on receiving elements 430 of one carrier bar 420. During the next circular movement of storage unit 400, sausage-shaped products P are suspended on receiving elements 430 of carrier bar 420 next to be filled. During this suspension process, storage unit 400, and thus, also sausage-shaped products P already suspended thereto, are at least approximately moved in circles, whereby acute changes in the moving direction are omitted. Thereby, possible pendulous movements of sausage-shaped products P suspended on storage unit 400 are reduced.

After a storage unit 400 is filed with the predefined number of sausage-shaped products P, said storage unit 400 is transferred to storage rack 310 and placed on the respective charging level. In the case that more than one storage unit 400 to be filled with sausage-shaped products P, is arranged in storage rack 310, transportation device 200 removes the next storage unit 400 to be filled from storage rack 310, and moves said storage unit 400 to delivery device 100, where it is filled with sausage-shaped products P, as described above.

Also, storage unit 400 may be provided with at least one sensor (not shown), which detects the presence or absence of a storage rack 310. In case that no storage rack 310 is present, the sensor may stop the handling system or at least components thereof and may output a respective signal. Said sensor may also detect the kind of the storage rack. Different kind of storage racks e.g. may have different dimensions or a different number and/or positions of charging levels. Data related to different kinds of storage racks may be stored in the handling system, like in the control unit. Based on these data, e.g. the suspension process or at least the loading or unloading process of the respective storage rack may be controlled.

Alternatively or additionally, a sensor may be provided in storage device 300, which monitors the charging levels of storage rack 310, and which may detect the presence or absence as well as the correct position of storage units 400 in storage rack 310, in order to control the handling system and to putout a respective signal.

It has to be understood that all sensors are coupled to the control unit of the handling system, to allow the system to control the units on the basis of the sensor signal.

Alternatively to the above described storage process, in which a sausage-shaped product P is suspended to a receiving element 430 of storage unit 400 by moving storage unit 400 relative to a fixedly arranged delivery element 122, naturally, also the receiving element 430 may be placed in a fixed position, e.g. in front of delivery element 122 on which a sausage-shaped product P is provided, and delivery element 122 is moved to handover the sausage-shaped product P onto receiving element 430.

At least during the horizontal movement of storage unit 400 while sausage-shaped products P are suspended thereto, i.e. the reversible lateral movement from the left side to the right side, the sausage-shaped products P already suspended to storage unit 400, slide along damping lips 510 of damping device 500, whereby the pendulous movement of the sausage-shaped products P caused by said lateral movement, is reduced.

It has to be understood that the movement of storage unit 400, particularly during the suspension process, depends on the program on the basis of which transportation device 200 is controlled. The control programs may vary dependent on the kind and size of the sausage-shaped products P to be suspended. Moreover, it may be desired to hang up the sausage-shaped products P in a pattern other than one by one in rows and columns. Respective programs allow the sausage-shaped products P to be hung up in any desired two-dimensional pattern. A storage unit 400 may thereby completely or only partially be filled.

Also, transportation device 200 may be controlled such that, during the suspension operation, storage unit 400 with the sausage-shaped products P already hung up thereto, may execute additional movements, like additional lateral or up- and downward movements, for reducing the pendulous movement of said sausage-shaped products P. These additional movements may be executed after a sausage-shaped product P has been removed from delivery element 122 and before the next sausage-shaped product P is provided at delivery element 122, thereby possible additionally required time is reduced to a minimum.

In the described embodiments of the inventive handling system, transportation device 200 is positioned in font of delivery device 200, and storage device 300 is arranged laterally to delivery device 100. It has to be understood that any other configuration of the handling system may be realized. Storage device 300 may also be positioned laterally to transportation device 200, or transportation device 200 may be positioned between delivery device 100 and storage device 300. The specific configuration may be selected dependent on the aim to be achieved, like an optimization of the handling time or an optimized use of the available space.

## Claims

1. A handling system for handling sausage-shaped products (P), like sausages, each sausage-shaped product (P) having a sausage-shaped body (B), the handling system comprises:
a delivery device (100) for feeding sausage-shaped products (P) to a hand-over area (HE),
a storage device (300) for temporarily storing at least one storage unit (400) configured for a reversible accommodation of sausage-shaped products (P),
a transportation device (200) configured for reversibly holding and maneuvering at least one storage unit (400) in the hand-over area (HE) for accommodating sausage-shaped products (P) on the storage unit (400) and for moving the storage unit (400) loaded with sausage-shaped products (P) to the storage device (300),
**characterised by** the storage unit (400) being configured for a storage accommodation of sausage-shaped products (P) in two of its dimensions.

2. The handling system according to claim 1,
wherein the sausage-shaped product (P) has at least one suspension element (S), like a suspension loop, attached to one end of the sausage-shaped body (B), and wherein the storage unit (400) is adapted for a hanging accommodation of the sausage-shaped products (P).

3. The handling system according to claim 1,
wherein the storage unit (400) is adapted for a lying accommodation of the sausage-shaped products (P).

4. The handling system according to any of claims 1 to 3,
further comprising a control unit for controlling and synchronizing the operation of at least the delivery device (100) and the transportation device (200).

5. The handling system according to any of claims 1 to 4,
further comprising at least a first sensor arrangement for detecting the presence of a sausage-shaped product (P) in the delivery device (100) and/or a second sensor arrangement for detecting at least the presence of a storage device (300) and/or the loading condition of the storage device (300).

6. The handling system according to any of claims 1 to 5,
further comprising a damping device (500) arranged at least in the region of the hand-over area (HE), for damping the motion of the sausage-shaped products (P) accommodated in the storage unit (400) and including preferably brush-like elements.

7. The handling system according to claim 6,
wherein the damping device (500) can be adjusted in its height position referred to the transportation device and/or in its angle position referred to the horizontal and/or vertical direction.

8. The handling system according to any of claims 1 to 7,
wherein the storage device (300) includes a rack (310) having at least one receptacle (340) for at least approximately horizontally receiving and supporting of at least one storage unit (400).

9. The handling system according to any of claims 1 to 8,
wherein the delivery device (100) comprises at least one feeding element (110) for successively feeding sausage-shaped products (P) to the hand-over area (HE), and
wherein the delivery device (100) is provided with a delivery means (120) arranged in the hand-over area (HE), for providing sausage-shaped products (P) to be delivered to a storage unit (400) being arranged in the hand-over area (HE).

10. The handling system according to claim 9,
wherein the delivery means (120) includes a stationary arranged delivery element (122) at which at least one sausage-shaped product (P) is provided for the transfer to the storage unit (400).

11. The handling system according to claim 9,
wherein the delivery means (120) includes a movable arranged delivery element (122) for a transfer of at least one sausage-shaped product (P) suspended thereon, to the storage unit (400).

12. The handling system according to any of claims 1 to 11, wherein the storage unit (400) comprises a frame work arranged at least approximately in a plane having an upper surface and an at least approximately planar lower surface, an engagement arrangement (440) configured for an engagement with the transportation device (200), and
receiving elements (430) configured for a reversible accommodation of sausage-shaped products (P) and arranged in a two-dimensional pattern.

13. The handling system according to claim 12,
wherein the receiving elements (430) are arranged on the lower surface of the frame work .

14. The handling system according to any of claims 1 to 13, wherein the transportation device (200) comprises:
an engagement head (270) for holding and maneuvering a storage unit (400), and
multi-axial drive means (240, 250, 260) for maneuvering the engagement head (270) about multiple axis and in multiple planes.

15. A method for controlling a handling system according to any of the preceding claims,
the method comprising the steps of:
- feeding of sausage-shaped products (P) by the delivery device (100) to the hand-over area (HE),
- temporarily storing at least one storage unit (400) configured for a reversible accommodation of sausage-shaped products (P),
**characterized by**
- reversibly holding and maneuvering the storage unit (400) by the transportation device (200) in the hand-over area (HE) for accommodating sausage-shaped products (P) in the storage unit (400) in two of its dimensions, and
- moving the storage unit (400) from the hand-over area (HE) to the storage device (300) by the transportation device (200).

## Patentansprüche

1. Handhabungssystem zum Handhaben wurstförmiger Produkte (P), wie Würste, wobei jedes wurstförmige Produkt (P) einen wurstförmigen Körper (B) aufweist, und wobei das Handhabungssystem enthält:
eine Zuführeinrichtung (100) zum Zuführen von wurstförmigen Produkten (P) zu einem Übergabebereich (HE),
eine Lagereinrichtung (300) zum vorübergehenden Speichern mindestens einer Lagereinheit (400), die für ein reversibles Aufnehmen von wurstförmigen Produkten (P) konfiguriert ist,
eine Transporteinrichtung (200), die zum reversiblen Halten und Manövrieren mindestens einer Lagereinheit (400) im Übergabebereich (HE), zum Lagern von wurstförmigen Produkten (P) auf der Lagereinheit (400) und zum Bewegen der mit wurstförmigen Produkten (P) beladenen Lagereinheit (400) zu der Speichereinrichtung (300) vorgesehen ist,
**dadurch gekennzeichnet, dass** die Lagereinheit (400) für eine Lagerung von wurstförmigen Produkten (P) in zwei ihrer Raumabmessungen konfiguriert ist.

2. Handhabungssystem nach Anspruch 1,
wobei das wurstförmige Produkt (P) mindestens ein Aufhängeelement (S), wie eine Aufhängeschlaufe aufweist, das an einem Ende des wurstförmigen Körpers (B) angebracht ist, und wobei die Lagereinheit (400) für eine hängende Unterbringung der wurstförmigen Produkte (P) ausgelegt ist.

3. Handhabungssystem nach Anspruch 1,
wobei die Lagereinheit (400) für eine liegende Unterbringung der wurstförmigen Produkte (P) ausgelegt ist.

4. Handhabungssystem nach einem der Ansprüche 1 bis 3,
weiterhin enthaltend eine Steuereinheit zum Steuern und Synchronisieren des Betriebs von mindestens der Zuführeinrichtung (100) und der Transporteinrichtung (200).

5. Handhabungssystem nach einem der Ansprüche 1 bis 4,
weiterhin enthaltend mindestens eine erste Sensoranordnung zum Erfassen des Vorhandenseins eines wurstförmigen Produkts (P) in der Zuführeinrichtung (100) und/oder eine zweite Sensoranordnung zum Erfassen mindestens des Vorhandenseins einer Speichereinrichtung (300) und/oder des Beladungszustands der Speichereinrichtung (300).

6. Handhabungssystem nach einem der Ansprüche 1 bis 5,
weiterhin enthaltend eine Dämpfungseinrichtung (500), die zumindest im Umfeld des Übergabebereichs (HE) angeordnet ist, um die Bewegung der in der Lagereinheit (400) untergebrachten, wurstförmigen Produkte (P) zu dämpfen und die vorzugsweise bürstenähnliche Elemente enthält.

7. Handhabungssystem nach Anspruch 6,
wobei die Dämpfungseinrichtung (500) in ihrer Höhenposition, bezogen auf die Transporteinrichtung, und/oder in ihrer Winkelposition, bezogen auf die horizontale und/oder vertikale Richtung, verstellbar ist.

8. Handhabungssystem nach einem der Ansprüche 1 bis 7,
wobei die Speichereinrichtung (300) ein Gestell (310) mit mindestens einem Aufnehmer (340) zur zumindest annähernd horizontalen Aufnahme und Abstützung von mindestens einer Lagereinheit (400) umfasst.

9. Handhabungssystem nach einem der Ansprüche 1 bis 8,
wobei die Zuführeinrichtung (100) mindestens ein Zuführelement (110) zum aufeinanderfolgenden Zuführen von wurstförmigen Produkten (P) zu dem Übergabebereich (HE) aufweist, und
wobei die Zuführeinrichtung (100) mit einem im Übergabebereich (HE) angeordneten Zuführmittel (120) versehen ist, um wurstförmige Produkte (P) bereitzustellen, die an eine in dem Übergabebereich (HE) angeordnete Lagereinheit (400) geliefert werden sollen.

10. Handhabungssystem nach Anspruch 9,
wobei das Zuführmittel (120) ein stationär angeordnetes Zuführelement (122) umfasst, an dem mindestens ein wurstförmiges Produkt (P) zum Transport zu der Lagereinheit (400) vorgesehen ist.

11. Handhabungssystem nach Anspruch 9,
wobei das Zuführmittel (120) ein beweglich angeordnetes Zuführelement (122), zum Transport von mindestens einem darauf aufgehängten wurstförmigen Produkt (P) zu der Lagereinheit (440) umfasst.

12. Handhabungssystem nach einem der Ansprüche 1 bis 11,
wobei die Lagereinheit (400) ein Rahmenwerk enthält, das zumindest annähernd in einer Ebene mit einer oberen Fläche und einer zumindest annähernd ebenen unteren Fläche angeordnet ist,
eine Eingriffsanordnung (440), die für den Eingriff mit der Transporteinrichtung (200) konfiguriert ist, und
Aufnahmeelemente (430), die für eine reversible Aufnahme von wurstförmigen Produkten (P) konfiguriert sind und in einem zweidimensionalen Muster angeordnet sind.

13. Handhabungssystem nach Anspruch 12,
wobei die Aufnahmeelemente (430) auf der unteren Oberfläche des Rahmenwerks angeordnet sind.

14. Handhabungssystem nach einem der Ansprüche 1 bis 13,
wobei die Transporteinrichtung (200) enthält:
einen Eingriffskopf (270) zum Halten und Manövrieren einer Lagereinheit (400), und
mehrachsige Antriebsmittel (240, 250, 260) zum Manövrieren des Eingriffskopfs (270) um mehrere Achsen und in mehreren Ebenen.

15. Verfahren zum Steuern eines Handhabungssystems nach einem der vorstehenden Ansprüche,
das Verfahren enthaltend die Schritte:
- Zuführen von wurstförmigen Produkten (P) durch die Zuführeinrichtung (100) zu dem Übergabebereich (HE),
- Zwischenlagern mindestens einer Lagereinheit (400), die für eine reversible Aufnahme von wurstförmigen Produkten (P) ausgelegt ist,
**gekennzeichnet durch**
- reversibles Halten und Manövrieren der Lagereinheit (400) durch die Transporteinrichtung (200) im Übergabebereich (HE), zum Aufnehmen von wurstförmigen Produkten (P) in der Lagereinheit (400) in zwei ihrer Raumabmessungen, und
- Bewegen der Lagereinheit (400) von dem Übergabebereich (HE) zu der Speichereinrichtung (300) durch die Transporteinrichtung (200).

## Revendications

1. Système de manutention permettant de manutentionner des produits en forme de saucisse (P), tels que des saucisses, chaque produit en forme de saucisse (P) ayant un corps en forme de saucisse (B), le système de manutention comprenant :
un dispositif de distribution (100) destiné à acheminer des produits en forme de saucisse (P) vers une zone de transfert (HE),
un dispositif de stockage (300) pour le stockage temporaire d'au moins une unité de stockage (400) configuré pour un logement réversible de produits en forme de saucisse (P),
un dispositif de transport (200) conçu pour maintenir et manoeuvrer de manière réversible au moins une unité de stockage (400) dans la zone de transfert (HE) pour la mise en forme de produits en forme de saucisse (P) sur l'unité de stockage (400) et pour déplacer l'unité de stockage (400) chargée de produits en forme de saucisse (P) vers le dispositif de stockage (300),
**caractérisé en ce que** l'unité de stockage (400) est configurée pour un logement de stockage de produits en forme de saucisse (P) dans deux de ses dimensions.

2. Système de manutention selon la revendication 1,
dans lequel le produit en forme de saucisse (P) présente au moins un élément de suspension (S), comme une boucle de suspension, fixée à une extrémité du corps en forme de saucisse (B), et dans lequel l'unité de stockage (400) est adaptée pour une suspension des produits en forme de saucisse (P).

3. Système de manutention selon la revendication 1,
dans lequel l'unité de stockage (400) est adaptée pour un positionnement couché des produits en forme de saucisse (P).

4. Système de manutention selon l'une quelconque des revendications 1 à 3, comprenant en outre une unité de commande pour commander et synchroniser le fonctionnement d'au moins le dispositif de distribution (100) et le dispositif de transport (200).

5. Système de manutention selon l'une quelconque des revendications 1 à 4, comprenant en outre au moins un premier agencement de capteurs pour détecter la présence d'un produit en forme de saucisse (P) dans le dispositif de distribution (100) et/ou un second agencement de capteurs destiné à détecter au moins la présence d'un dispositif de stockage (300) et/ou l'état de charge du dispositif de stockage (300).

6. Système de manutention selon l'une quelconque des revendications 1 à 5, comprenant en outre un dispositif d'amortissement (500) disposé au moins dans la région de la zone de transfert (HE), pour amortir le mouvement des produits en forme de saucisse (P) logés dans l'unité de stockage (400) et comprenant de préférence des éléments de type brosse.

7. Système de manutention selon la revendication 6,
dans lequel le dispositif d'amortissement (500) peut être réglé en hauteur par rapport au dispositif de transport et/ou selon sa position angulaire par rapport à la direction horizontale et/ou verticale.

8. Système de manutention selon l'une quelconque des revendications 1 à 7,
dans lequel le dispositif de stockage (300) comprend une crémaillère (310) ayant au moins un réceptacle (340) pour recevoir au moins approximativement horizontalement et soutenir au moins une unité de stockage (400).

9. Système de manutention selon l'une quelconque des revendications 1 à 8,
dans lequel le dispositif de distribution (100) comprend au moins un élément d'alimentation (110) pour acheminer successivement des produits en forme de saucisse (P) vers la zone de transfert (HE), et
dans lequel le dispositif de distribution (100) est pourvu d'un moyen de distribution (120) disposé dans la zone de transfert (HE), pour fournir des produits en forme de saucisse (P) à distribuer à une unité de stockage (400) disposée dans la zone de transfert (HE).

10. Système de manutention selon la revendication 9,
dans lequel le moyen de distribution (120) comprend un élément de distribution fixe (122) au niveau duquel au moins un produit en forme de saucisse (P) est prévu pour le transfert vers l'unité de stockage (400).

11. Système de manutention selon la revendication 9,
dans lequel le moyen de distribution (120) comprend un élément de distribution mobile (122) pour un transfert d'au moins un produit en forme de saucisse (P) suspendu à celui-ci, à l'unité de stockage (400).

12. Système de manutention selon l'une quelconque des revendications 1 à 11,
dans lequel l'unité de stockage (400) comprend une structure disposée au moins approximativement dans un plan ayant une surface supérieure et une surface inférieure au moins approximativement plane,
un agencement de mise en prise (440) configuré pour une mise en prise avec le dispositif de transport (200), et
des éléments de réception (430) configurés pour un logement réversible de produits en forme de saucisse (P) et agencés selon un motif bidimensionnel.

13. Système de manutention selon la revendication 12,
dans lequel les éléments de réception (430) sont disposés sur la surface inférieure de la structure.

14. Système de manutention selon l'une quelconque des revendications 1 à 13,
dans lequel le dispositif de transport (200) comprend :
une tête de mise en prise (270) pour maintenir et manoeuvrer une unité de stockage (400), et
des moyens d'entraînement multi-axiaux (240, 250, 260) pour manoeuvrer la tête de mise en prise (270) autour de multiples axes et dans de multiples plans.

15. Procédé de commande d'un système de manutention selon l'une quelconque des revendications précédentes,
le procédé comprenant les étapes consistant en :
- l'acheminement de produits en forme de saucisse (P) par le dispositif de distribution (100) vers la zone de transfert (HE),
- le stockage temporaire d'au moins une unité de stockage (400) configurée pour un logement réversible de produits en forme de saucisse (P),
**caractérisé par**
- le maintien et la manoeuvre réversible de l'unité de stockage (400) par le dispositif de transport (200) dans la zone de transfert (HE) pour loger des produits en forme de saucisse (P) dans l'unité de stockage (400) dans deux de ses dimensions, et
- le déplacement de l'unité de stockage (400) de la zone de transfert (HE) au dispositif de stockage (300) par le dispositif de transport (200).
